(19) Europäisches Patentamt / European Patent Office / Office européen des brevets

(11) **EP 2 506 040 A1**

(12) **EUROPEAN PATENT APPLICATION**

(43) Date of publication:
**03.10.2012 Bulletin 2012/40**

(51) Int Cl.:
***G01V 3/12*** *(2006.01)*

(21) Application number: **11160917.8**

(22) Date of filing: **01.04.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Université Catholique de Louvain 1348 Louvain-La-Neuve (BE)**

(72) Inventor: **Lambot, Sébastien 1325 Dion-Valmont (BE)**

(74) Representative: **Pecher, Nicolas et al Pecher & de Groote sprl Centre Monnet Avenue Jean Monnet, 1 1348 Louvain-la-Neuve (BE)**

(54) **Method and device for characterization of physical properties of a target volume by electromagnetic inspection.**

(57) The method of the invention comprises the following steps: positioning a field source (40) at at least one first distance from a target volume (10); positioning a field receiver (50) at at least one second distance from same target volume (10); for each couple of first and second distance, determining a measured signal $S_{mes}$ and a simulated signal $S_{sim}$; determining values of physical parameters of same target volume (10) by minimizing a function depending on the measured $S_{mes}$ and simulated signals $S_{sim}$. The method of the invention is characterized in that when determining a simulated signal $S_{sim}$, specific global reflection coefficients and receiver-receiver functions are introduced in feedback loops.

Fig. 1

EP 2 506 040 A1

**Description**

**Field of the invention**

The invention relates to the field of characterization of physical properties of a target volume by using electromagnetic waves. More precisely, the invention relates, according to a first aspect, to a method for determining values of physical parameters of a target volume. According to a second aspect, the invention relates to a device for determining said values.

**Description of prior art**

An accurate characterization of a target volume such as sub surfaces is increasingly important in different fields, for example in agricultural and environmental engineering, in groundwater hydrology, ground physics, and civil engineering. There exist non invasive characterization techniques such as ground-penetrating radar (GPR) or the method of magnetic induction. In the first case, an incident signal that we name $a$ is sent to a field source such as an antenna. Such field source then sends incident electromagnetic waves to a target volume to be studied and a backscattered signal that we name $b_{mes}$ is measured at the exit of a field receiver. This field receiver is generally also an antenna. A measured signal that we name $S_{mes}$ can then be determined from said backscattered signal $b_{mes}$. Usually, $S_{mes}$ is defined by equation (Eq. 1):

$$S_{mes} = b_{mes}/a \ (\text{Eq. 1})$$

Common GPR techniques are based on pulse radars. Vector network analyzer (VNA) or corresponding technologies are increasingly used nowadays. A VNA that is connected to a field source and a field receiver by waveguides directly determine a measured signal $S_{mes}$. The measured backscattered signal $b_{mes}$ and the measured signal $S_{mes}$ depend on physical properties of the target volume, notably its magnetic permeability, its dielectric permittivity, and its electric conductivity. From some of these parameters and in particular from the frequency-dependent electrical properties of the target volume, one can deduce the water content in the studied target volume as an example, see for instance the article by G. Topp et al., entitled "Electromagnetic determination of soil water content: Measurements in coaxial transmission lines", published in Water Resources Res. Vol 16, pp574-582, 1980. When using the method of magnetic induction, one primary coil transmits to a target volume a primary alternating electromagnetic field, typically in the Hz to kHz range. This primary field induces eddy currents in the target volume whose amplitudes are related to the electrical conductivity of the target volume. These eddy currents create a secondary field that is phase shifted from the primary field. The magnitude and the phase of this secondary field can be measured by a field receiver or secondary coil and used to determine the apparent electrical conductivity of the target volume.

When dealing with non invasive characterization techniques such as GPR or the method of magnetic induction, one typically has to have a simulated signal $S_{sim}$ or a simulated backscattered signal $b_{sim}$ as an example. Then, values of sought physical parameters of the target volume are obtained by minimizing the differences between $S_{mes}$ and $S_{sim}$, or between $b_{mes}$ and $b_{sim}$, typically by least square difference techniques. In methods known by the one skilled in the art, differences between measured and simulated Green's functions are sometimes used rather than the differences between $S_{mes}$ and $S_{sim}$, or between $b_{mes}$ and $b_{sim}$ when determining sought values of physical parameters (see for instance the article by S Lambot et al. published in IEEE Trans. On Geoscience and Remote Sensing, vol. 42, No 11, November 2004, and entitled "Modeling of ground-penetrating radar for accurate characterization of subsurface electric properties"). These Green's functions are well-known by the one skilled in the art and represent a field created at a point because of a unit source positioned at another point.

In the article by S Lambot et al. published in IEEE Trans. on Geoscience and Remote Sensing, vol. 42, No 11, November 2004, and entitled "Modeling of ground-penetrating radar for accurate characterization of subsurface electric properties", the author proposes to model the antenna as composed of elementary model components in series and parallel. From this approach, the author proposes equation (Eq. 2) for evaluating the signal S at a VNA:

$$S(\omega) = \frac{b(\omega)}{a(\omega)} = H_i(\omega) + \frac{H_t(\omega)G(\omega)H_r(\omega)}{1 - H_f(\omega)G(\omega)} \ (\text{Eq. 2})$$

where:

- ω = 2π$f$ with $f$ being the frequency of the incident signal $a$;
- $H_i$ represents a complex return loss; $H_t$ (respectively $H_r$) stands for a transmitting (respectively receiving) transfer function; $H_f$ is a feedback transfer function;
- $G(\omega)$ is a Green's function representing a transfer function of an air-subsurface system modeled as a multilayered target volume.

The antenna-characteristic reflection and transmission coefficients $H_i$, $H_t$, $H_r$, and $H_f$ can be obtained from a calibration procedure. From a measured signal $S_{mes}$, one can then determine a measured Green's function $G_{mes}$ by using equation (Eq. 2). It is also possible to have by calculation a simulated Green's function $G_{sim}$, such a simulated Green's function including physical parameters whose values are wanted. By minimizing the difference between $G_{mes}$ and $G_{sim}$, one can deduce values of sought physical parameters.

This method assumes that the field source and the field receiver are points. Such a situation is only justified when far-field conditions can be assumed. In far-field conditions, a local plane wave field distribution is assumed. Typically, far-field conditions are valid when the distance between the studied target volume and the field source / field receiver is large (far-field conditions). In practice, far-field conditions cannot be always assumed. Indeed, to increase the spatial resolution, one typically places the field source and the field receiver close to the target volume. This also allows one to penetrate a target volume more deeply and/or to use an incident field of a larger frequency. In such situations, far-field conditions can no longer be assumed. Therefore, other methods are needed.

When far-field conditions cannot be assumed, the article published in Proceedings of the 13th International Conference on Ground Penetrating Radar (GPR 2010), p 898-902, Edited by L. Crocco, L. Orlando, R. Persico, and M. Pieraccini, Lecce, Italy, June 21-25, by S. Lambot et al. and entitled "Full-waveform modeling of ground-coupled GPR antennas for wave propagation in multilayered media: the problem solved ? " proposes the following approach for calculating a simulated signal $S_{sim}$. A field source is represented by an equivalent set of source elements, $S_n$, n = 1 ... $N$, and a field receiver by an equivalent set of receiver elements $F_n$, n = 1 ... $N$. In the frequency domain, one can evaluate, in a first approximation, the ratio between a backscattered signal $b_{th}$ and an incident signal $a$. Following the approach proposed in the above-mentioned article, the ratio is then expressed by equation (Eq. 3):

$$S_{sim}(\omega) = \frac{b_{th}(\omega)}{a(\omega)} = R_i(\omega) + \frac{\sum_{n=1}^{N}\sum_{m=1}^{N} T_n^s(\omega) G_{xx}^{mn}(\omega) T_m^r(\omega)}{1 - R_s(\omega)\sum_{n=1}^{N}\sum_{m=1}^{N} T_n^s(\omega) G_{xx}^{mn}(\omega) T_m^r(\omega)} \text{ (Eq. 3)}$$

where :

- $R_i$ is a global reflection coefficient of the antenna;

- Tirepresent the global transmission coefficients of the N equivalent source elements; $T_m^r$ represent the global transmission coefficients of the N equivalent receiver elements; $R_s$ is a global reflection coefficient of the N equivalent receiver elements;

- $G_{xx}^{mn}$ is a Green's function evaluated at a receiver element when a unit strength electric dipole is placed at a source element.

The antenna-characteristic reflection and transmission coefficients $R_i$, $T_n$, $T_m$, and $R_s$ can be obtained from a calibration procedure as an example. By minimizing the differences between a measured signal $S_{mes}$ and a simulated signal $S_{sim}$ given by equation (Eq. 3), one can deduce values of sought physical parameters that enter the Green's functions $G_{xx}^{mn}$.

Equations (Eq. 2) or (Eq. 3) can be used as a first approximation when trying to determine values of physical parameters of a target volume subjected to incident electromagnetic waves. Nevertheless, the one skilled in the art would appreciate a more precise method.

**Summary of the invention**

It is an object of the present invention to provide a method for determining one or more values of one or more physical properties of a target volume subjected to incident electromagnetic waves that has a higher precision. To this end, the method of the invention comprises the following steps:

- positioning a field source at at least one first distance $h_{1,s}$ from said target volume;
- positioning a field receiver at at least one second distance $h_{1,f}$ from said target volume;
- for each couple of distances ($h_{1,s}$, $h_{1,f}$), providing to said field source an incident signal *a* such that said field source sends incident electromagnetic waves to said target volume, some of said incident electromagnetic waves hitting afterwards said field receiver;
- for each couple of distances ($h_{1,s}$, $h_{1,f}$), acquiring a backscattered signal $b_{mes}$ from said field receiver, said backscattered signal $b_{mes}$ resulting from said incident signal *a*;
- determining at least one measured signal $S_{mes}$, each of said at least one measured signal $S_{mes}$ being determined for each couple of distances ($h_{1,s}$, $h_{1,f}$) and being a function of said backscattered signal $b_{mes}$;
- representing said field source by N equivalent source elements, N being an integer greater than or equal to one;
- representing said field receiver by M equivalent receiver elements, M being an integer greater than or equal to one;
- providing antenna-characteristic reflection and transmission coefficients of said N source elements and said M receiver elements;
- calculating at least one simulated signal $S_{sim}$, each of said at least one simulated signal $S_{sim}$ being calculated for each couple of distances ($h_{1,s}$, $h_{1,f}$) by considering electromagnetic propagation phenomena taking place in said target volume subjected to incident electromagnetic waves;
- determining said one or more values of said one or more physical parameters that minimize a function $\phi$ depending on said at least one measured signal $S_{mes}$ and said at least one simulated signal $S_{sim}$.

The method of the invention is characterized in that said antenna-characteristic reflection and transmission coefficients include M specific global reflection coefficients $R_{f,i}$ ($i = 1 \ldots$ M) for the M equivalent receiver elements, and in that when calculating the at least one simulated signal $S_{sim}$, said receiver elements are considered as sources of electromagnetic waves to said target volume by the introduction of said M specific global reflection coefficients $R_{f,i}$ and MxM receiver-receiver functions $G_{ij}^{f}$ ($i = 1 \ldots$ M; $j = 1 \ldots$ M) in feedback loops.

As the method of the invention uses M specific global reflection coefficients $R_{f,i}$ for the M equivalent receiver elements, it does not assume that all receiver elements have a same global reflection coefficient contrary to the method linked to equation (Eq. 3). As a consequence, one can expect to have a higher precision with the method of the invention as it is possible to take into account possible different values of said global reflection coefficients $R_{f,i}$ for the M equivalent receiver elements. In a general case, the different receiver elements do not indeed present same properties of reflection. When determining a simulated signal $S_{sim}$, the method of the invention also introduces MxM receiver-receiver functions $G_{ij}^{f}$. By introducing these receiver-receiver functions $G_{ij}^{f}$ that are in a general case different from source-receiver functions $G_{cd}$, one can take into account the fact that the receiver elements are not necessary located at the same positions as the source elements (non zero-offset conditions). This was not the case with the above-mentioned methods.

Indeed, in equation (Eq. 3), only one type of functions $G_{xx}^{mn}$ is introduced, both for the receiver elements and the source elements. In the method of the invention, the reflection capability of each receiver points is taken into account in the evaluation of a simulated signal $S_{sim}$ by the introduction of feedback loops comprising said specific global reflection coefficients $R_{f,i}$ and said MxM receiver-receiver functions $G_{ij}^{f}$. This increases the accuracy of the evaluation of a simulated signal $S_{sim}$ which leads to a method able to determine values of physical properties of a target volume subjected to an incident electromagnetic field with a higher precision. The method of the invention permits indeed to properly represent the interactions between the antennas (field receiver and field source) and the target volume.

Preferably, the method of the invention is characterized in that said M specific global reflection coefficients $R_{f,i}$ ($i = 1 \ldots$ M) are identical.

Preferably, the method of the invention is characterized in that:

- said incident signal a is provided to said field source with various frequencies,
- said at least one measured signal $S_{mes}$ is determined for each frequency of said incident signal *a*,
- said at least one simulated signal $S_{sim}$ is calculated for each frequency of said incident signal a,
- said antenna-characteristic reflection and transmission coefficients are provided for each frequency of said incident signal a,

- said function $\phi$ depends on each measured and simulated signal, $S_{mes}$ and $S_{sim}$ determined for each frequency of said incident signal a.

Preferably, the method of the invention is characterized in that said simulated signal $S_{sim}$ is given by equation (Eq. 5) below. The inventor has found, in the frequency domain, an exact expression for a simulated signal $S_{sim}$ that is given by equation (Eq. 5). When using such an expression, one better evaluates the at least one simulated signals. As a consequence, the precision of the method for determining values of physical parameters of a target volume is increased.

Preferably, the method of the invention is characterized in that said N equivalent source elements are assumed to be unit-strength electric sources along an x-direction sending said incident electromagnetic waves along a z-direction perpendicular to said x-direction, in that said receiver-receiver functions are given by equation (Eq. 9), and in that $G_{cd}$ Green's functions are given by equation (Eq. 10).

Preferably, the antenna-characteristic reflection and transmission coefficients of the N source elements and the M receiver elements are determined from a calibration procedure comprising the following steps:

a. choosing *Xcal* couples of calibration distances ($hcal_{s,x}$, $hcal_{f,x}$), x = 1, ..., *Xcal,* such that the difference $hcal_{s,x}$—$hcal_{f,x}$ has a constant value for x = 1, ..., *Xcal,* and such that *Xcal* is an integer larger than three;

b. positioning said field source at Xcal calibration distances $hcal_{s,x}$ from a calibration volume and said field receiver at Xcal calibration distances $hcal_{f,x}$ (x = 1, ..., Xcal) from same calibration volume;

c. for each of said Xcal couples of calibration distances ($hcal_{s,x}$, $hcal_{f,x}$), providing to said field source an incident signal a such that said field source sends incident electromagnetic waves to said calibration volume, some of said incident electromagnetic waves hitting afterwards said field receiver, and acquiring a backscattered signal $b_{mes}$ from said field receiver;

d. for each of said Xcal couples of calibration distances ($hcal_{s,x}$, $hcal_{f,x}$), determining a measured signal $S_{mes}$;

e. for each of at least three but not all couples of calibration distances ($hcal_{s,x}$, $hcal_{f,x}$), calculating a simulated signal $S_{sim}$ by assuming that said field source and said field receiver are points;

f. determining three antenna-characteristic reflection and transmission coefficients by comparing the measured signals $S_{sim}$ and the simulated signals $S_{sim}$ corresponding to said three but not all couples of calibration distances ($hcal_{s,x}$, $hcal_{f,x}$);

g. assuming that said field source is represented by said N equivalent source elements and that said field receiver is represented by said M equivalent receiver elements;

h. determining initial values of antenna-characteristic reflection and transmission coefficients of said N source elements and said M receiver elements from the three antenna-characteristic reflection and transmission coefficients determined in step f.;

i. refining values of said antenna-characteristic reflection and transmission coefficients of said N source elements and said M receiver elements by minimising a function depending on the measured signals $S_{mes}$ determined in step e. and an increasing number of simulated signals $S_{sim}$ determined for an increasing number of couples of calibration distances.

By following this calibration procedure, one can efficiently determine the antenna-characteristic reflection and transmission coefficients. In particular, the determination of initial values of these antenna-characteristic reflection and transmission coefficients from few couples of calibration distances where the field source and the field receiver are assumed to be points is an effective way for determining these antenna-characteristic reflection and transmission coefficients from a procedure of minimization.

According to a second aspect, the inventor proposes a device comprising: a field source, a field receiver, an apparatus for providing an incident signal a to said field source, an apparatus for acquiring a backscattered signal b from said field receiver and for determining at least one measured signal $S_{mes}$, means for representing said field source by N equivalent source elements, N being an integer greater than or equal to one, means for representing said field receiver by M equivalent receiver elements, M being an integer greater than or equal to one, means for providing antenna-characteristic reflection and transmission coefficients of said N source elements and said M receiver elements, means for determining at least one simulated signal $S_{sim}$, means for determining said values of said physical parameters that minimize a function depending on said at least one measured signal $S_{mes}$ and said at least one simulated signal $S_{sim}$. The device of the invention is characterized in that said antenna-characteristic reflection and transmission coefficients include M specific global reflection coefficients $R_{f,i}$ ($i$ = 1 ... *M*) for the M equivalent receiver elements, and in that when determining the at least one simulated signal $S_{sim}$, said receiver elements are considered as acting as sources of electromagnetic waves by the introduction of said M specific global reflection coefficients $R_{f,i}$ and MxM receiver-receiver functions $G_{ij}^{f}$ ($i$ = 1 ... $M$; $j$ = 1 ... M) in feedback loops.

## Short description of the drawings

These and further aspects of the invention will be explained in greater detail by way of example and with reference to the accompanying drawings in which:

Fig.1     shows an embodiment of a device according to the invention in relation to a target volume;
Fig.2     shows a block diagram illustrating the method of the invention;
Fig.3     shows different layers of a target volume;
Fig.4     shows in a two-dimension plane an example of repartition of source elements and receiver elements;
Fig. 5    shows an experimental setup when using the method of the invention in a transmitting mode;
Fig.6     shows, in the frequency domain, a comparison between measured and simulated signals when a Vivaldi antenna is positioned at 0 mm above a water layer;
Fig.7     shows, in the time domain, a comparison between measured and simulated signals when a Vivaldi antenna is positioned at 0 mm above a water layer;
Fig.8     shows, in the frequency domain, a comparison between measured and simulated signals when a Vivaldi antenna is positioned at 9.86 mm above a water layer;
Fig.9     shows, in the frequency domain, a comparison between measured and simulated signals when a Vivaldi antenna is positioned at 25.53 mm above a water layer;
Fig.10    shows, in the frequency domain, a comparison between measured and simulated signals when a Vivaldi antenna is positioned at 710 mm above a water layer.

The figures are not drawn to scale. Generally, identical components are denoted by the same reference numerals in the figures.

## Detailed description of preferred embodiments

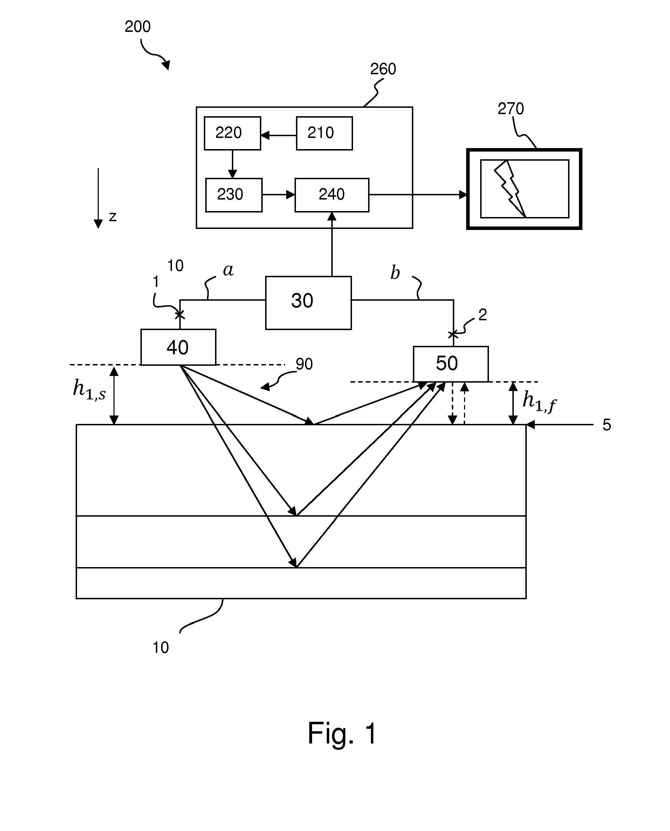

Figure 1 shows an example of a device 200 according to the invention in relation to a target volume 10. We assume that values of some physical parameters of said target volume 10 are wanted and that it has different layers having different electrical and/or magnetic properties. One can also use the method of the invention when the target volume 10 only has one layer. The different layers are separated by interfaces and a first interface 5 delimiting the target volume 10 represents a closest boundary of said target volume 10 with respect to a field source 40 and a receiver 50. An example of a target volume 10 is a zone in the ground, below the interface between air and ground. Any type of target volume 10 can be analyzed with the method of the invention which means that the method of the invention is not limited to subsurface volumes (the target volume 10 can represent any material). Examples of physical parameters are: the number of layers, their thicknesses $t_l$ (the subscript $l$ stands for layer number l), the values of the permittivity $\varepsilon$, electrical conductivity $\sigma$ and magnetic permeability $\mu$ of each layer. In figure 1, it is assumed that the number of layers of the target volume 10 (that we name $L$ — 1) is equal to $L$ — 1 = 3. An apparatus 30 sends to a field source 40 an incident signal $a$. The device 200 of figure 1 also comprises a field receiver 50. Examples of field source 40 and field receiver 50 are radar antennas for Ground Penetrating Radar (GPR) systems. Examples of radar antennas are Vivaldi antennas operating in the range 0.8-4 GHz and bowtie antennas. When using a method of magnetic induction, the field source 40 and the field receiver 50 are typically coils. The field source 40 (respectively field receiver 50) is positioned at a first distance $h_{1,s}$ (respectively second distance $h_{1,f}$) from the target volume 10. Preferably, the first distance $h_{1,s}$ (respectively second distance $h_{1,f}$) is the smallest distance between the field source 40 (respectively field receiver 50) and the first interface 5. Hence, $h_{1,s}$ (respectively $h_{1,f}$) is the distance between first interface 5 and the closest point of the field source 40 (respectively field receiver 50) with respect to said first interface 5. Preferably, the position deviations of the points of the first interface 5 with respect to a plane passing through these points are less than $\lambda/_{10}$ where $\lambda$ is the wavelength of the incident signal $a$ (typically such a plane is defined as the plane corresponding to the smallest standard deviation of the distances between the points of the first interface 5 and such a plane). This means, as shown in figure 1, that the interfaces between the different layers are preferably locally plane. More preferably, the interfaces are perpendicular to the direction of propagation of incident electromagnetic waves 90 sent by the field source 40. More preferably, the interfaces are plane in a footprint of the field source 40. When using a GPR working with a frequency of 200-2000 MHz and such that $h_{1,s}$ tends to zero, such a footprint has an area of around one square meter.

As the field source 40 receives the incident signal $a$ as an inupt, it sends incident electromagnetic waves 90 to the target volume 10. As the target volume 10 comprises different layers having different electrical and/or magnetic properties, different reflections of the incident electromagnetic waves 90 take place at the interfaces between the different layers. Some of these reflections hit the field receiver 50 afterwards as shown in figure 1. Then the field receiver 50 can also act as a source of electromagnetic waves because of reflection phenomena at said field receiver 50. Electromagnetic waves resulting from the reflection phenomena at the field receiver 50 are depicted in figure 1 by dashed arrows. Only one reflection at the field receiver 50 is shown in that figure but actually, infinite reflection loops take place between the field receiver 50 and the target volume 10. Moreover, electromagnetic waves resulting from the reflection phenomena at the field receiver 50 can also be reflected at the different interfaces of the target volume 10. Only one reflection at the upper interface is shown in figure 1 for clarity reasons.

From all the electromagnetic waves that hit the field receiver 50, a backscattered signal b is acquired by the apparatus 30. In GPR systems, an example of an apparatus 30 is a vector network analyser (VNA) that is known by the one skilled in the art. Typically the field source 40 and the field receiver 50 are connected to the apparatus 30 via high quality 50 Ohm impedance coaxial cables (an example of such a cable is the model Sucoflex 104PEA, Huber+Suhner). Some VNA are able to provide an incident signal $a$ to the field source 40. When it is not the case, the apparatus 30 has to comprise a generator unit to provide said incident signal $a$ to the field source 40. It is worth noting that knowledge of incident signal $a$ is not required when using a VNA as such an apparatus generally directly provide a measured signal defined as $S_{mes} = b_{mes}/a$. The apparatus 30 that is connected to the field source 40 and the field receiver 50 allows one to provide to the field source 40 an incident signal $a$ and to choose some properties of said incident signal $a$ such as its magnitude and its frequency. The apparatus 30 also allows one to analyze the backscattered signal b from the field receiver 50. The incident signal $a$ can have a fixed frequency $f$ or can be frequency modulated. An advantage of using an incident signal $a$ that is frequency modulated is to have to the possibility to determine the frequency dependence of physical parameters studied by the method of the invention. The backscattered signal $b$ depends on the incident signal $a$, on values of physical parameters of the target volume 10, and on physical properties of the field receiver 50, notably its reflection properties. In figure 1, points 1 and 2 stand for the points where the incident signal $a$ and the backscattered signal b are determined.

We now detail the different steps of the method of the invention. The device 200 of the invention is detailed afterwards. First, the field source 40 (respectively the field receiver 50) is positioned at at least one first distance $h_{1,s}$ (respectively at at least one second distance $h_{1,f}$) from the target volume 10. Then, one has to provide to the field source 40 an incident signal $a$ such that said field source 40 then sends incident electromagnetic waves 90 to the target volume 10. As shown in figure 1, some of the incident electromagnetic waves 90 are reflected by the target volume 10. To carry out the method of the invention, some of the incident electromagnetic waves 90 need afterwards to hit the field receiver 50 (in figure 1, this results from reflection phenomena at different interfaces of the target volume 10). Some of these reflections can then be also reflected at the field receiver 50. Nevertheless, a backscattered signal b is generated at the exit of the field receiver 50, said backscattered signal b depending on the incident signal $a$. This backscattered signal $b$ can be measured by an apparatus 30. We name $b_{mes}$ the measured backscattered signal b.

From the incident and the measured backscattered signals, $a$ and $b_{mes}$, one can determine a measured signal $S_{mes}$. Generally, the one skilled in the art defines a measured signal $S_{mes}$ by equation (Eq. 1) that is $S_{mes} = b_{mes}/a$. Other definitions are possible. As an example, one could take $S_{mes} = b_{mes}$.

Then, one has to determine a simulated signal $S_{sim}$ that will be compared to said measured signal $S_{mes}$. For that, it is assumed that the field source 40 can be represented by N equivalent source elements 60, and that the field receiver 50 can be represented by M equivalent receiver elements 70, with N and M being integers greater than or equal to one. Preferably, these source elements 60 are considered as being infinitesimal electric dipoles or magnetic dipoles. The values of M and N can be different but preferably, M=N. As the complexity of the electromagnetic waves propagation increases (which typically arises when the field source 40 and the field receiver 50 are close to the first interface, that means when $h_{1,s}$ and $h_{1,f}$ are not large with respect to the largest dimensions of the field source 40 and field receiver 50) one will preferably take values of M and N larger than one. In such cases, one can take as an example M~N~10 and preferably, M=N=7. On the opposite, when $h_{1,s}$ and $h_{1,f}$ are sufficiently large to assume that far-field conditions are fulfilled, one can take smaller values of M and N, and preferably N=M=1. In far-field conditions, a local plane wave field is assumed. When this assumption is not valid, the conditions are named near-field conditions. There is no clear limit between far-field and near-field conditions. Nevertheless, far-field conditions are typically encountered when the distances $h_{1,s}$ and $h_{1,f}$ are larger than the largest dimensions of the field source 40 and the field receiver 50. Preferably, the limit between far-field and near-field is defined as

$$R_{FF} = 2\,D^2/\lambda \ \text{(Eq. 4)}$$

where D is the largest dimension of the field source 40 or the field receiver 50, and $\lambda = c/f$ is the wavelength of the used incident signal *a* (c is the speed of propagation and *f* the frequency of the incident signal *a*). $R_{FF}$ is measured from the field source 40 or from the field receiver 50. We deduce $R_{FF} \sim 0{,}34$ m when $D = 16$ cm and $f = 2$ GHz.

To obtain a simulated signal $S_{sim}$, one has to know the transmission properties of the N source elements 60 and the transmission and reflection properties of the M equivalent receiver elements 70. It is also necessary to know a global transfer function $T_1$ between incident signal *a* and backscattered signal b for accounting for direct coupling between the source elements 60 and the receiver elements 70. The global transfer function $T_1$ represents the measured signal $S_{mes}$ in free space which means when incident electromagnetic waves 90 from the field source 40 do not hit any target volume 10. The global transfer function $T_1$ is generally determined by measurements with the antennas directed toward the sky. When the field source 40 and the field receiver 50 are located at a same position (zero-offset configuration), the global transfer function $T_1$ represents internal antenna reflections. Otherwise, $T_1$ stands for a global transmission coefficient, said global transmission coefficient being the global transmission coefficient in free space between the field source 40 and the field receiver 50. This means that $T_1$ represents the measured signal $S_{mes}$ at the field receiver 50 when the field source 40 sends electromagnetic waves 90 that are not reflected back (or transmitted) to said field receiver by (or via) a target volume 10.

The transmission properties of the N source elements 60 can be described by global transmission coefficients $T_{s,d}$, $d = 1, \ldots N$. The reflection and transmission properties of the M equivalent receiver elements 70 can be described by global transmission, and global reflection coefficients: $T_{f,j}$, and $R_{f,j}$ with $j = 1, \ldots M$. We name $T_1$, $T_{s,d}$, $T_{f,j}$, and $R_{f,j}$ by antenna-characteristic reflection and transmission coefficients of the N source elements 60 and the M receiver elements 70. These antenna-characteristic reflection and transmission coefficients are frequency dependent and need to be provided (from a calibration procedure for instance) to carry out the method of the invention. An example of calibration procedure is explained below. Contrary to other methods known by the one skilled in the art, the method of the invention includes M specific global reflection coefficients $R_{f,j}$ for the M equivalent receiver elements 70 when determining a simulated signal $S_{sim}$.

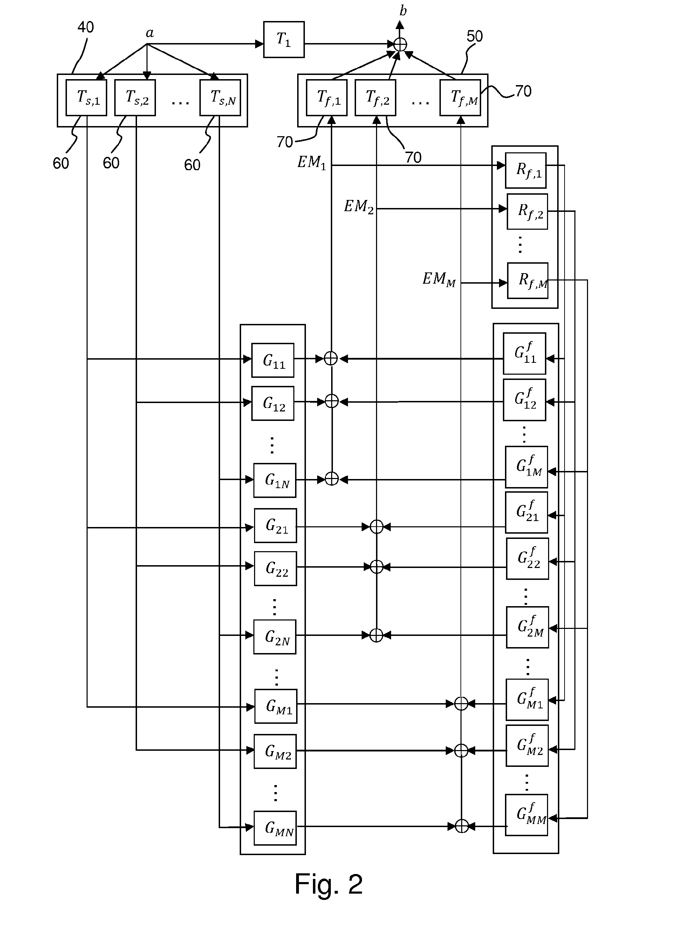

Figure 2 shows a block diagram explaining how a simulated signal $S_{sim}$ can be determined in the frequency domain with the method of the invention. This block diagram is based on the fact that the field source 40, the field receiver 50, and the target volume 10 are time-invariant linear systems. This approach is also possible because of the linearity of Maxwell's equations.

First, a direct coupling between the source elements 60 and the receiver elements 70 is taken into account by a global transfer function $T_1$. Each of the N source elements 60 is assumed to send incident electromagnetic waves 90 when an incident signal *a* is provided to the field source 40. These incident electromagnetic waves 90 first interact with the target volume 10, and some of them travel to the receiver elements 70. Source-receiver functions $G_{cd}$, c = 1, ... M; $d = 1,...N$, allow one to obtain the electromagnetic waves hitting the receiver element 70 number c when an incident electromagnetic wave is sent by a source element number d and transmitted via the target volume 10 to said receiver element 70 number c. These source-receiver functions $G_{cd}$ take into account the multiple reflections that can take place in the target volume 10 of figure 1. Preferably, these source-receiver functions $G_{cd}$ are Green's functions that are known solutions of Maxwell's equations for wave propagation in layered media (see for instance the article by S Lambot et al. published in IEEE Trans. On Geoscience and Remote Sensing, vol. 42, No 11, November 2004, and entitled "Modeling of ground-penetrating radar for accurate characterization of subsurface electric properties"). As the source-receiver functions $G_{cd}$ only represent the electromagnetic waves being reflected by the target volume 10 to the receiver elements 70 (and not the entire set of electromagnetic waves hitting the receiver elements 70), it is possible, with the method of the invention, to consider a case where a field source 40 is similar to a field receiver 50. Then, one has the advantage of using only one antenna that is both the field source 40 and the field receiver 50. By using a VNA connected to such an antenna, one can obtain a measured signal defined as the ratio between an incident signal *a* and a backscattered signal b.

Because of the reflection properties of the receiver elements 70 that are taken into account by specific global reflection coefficients $R_{f,j}$, part of the electromagnetic waves sent by a source element 60 number d and that are transmitted to the receiver element 70 number c is reflected back to the target volume 10. These reflection waves can also be reflected by the target volume 10 and finally hit a receiver element i. In such a situation the receiver element 70 number *j* becomes a source of electromagnetic waves. Receiver-receiver functions $G_{ij}^{f}$ ($i = 1 \ldots M; j = 1 \ldots M$) are introduced in the method of the invention. They take into account multiple reflections that can take place in the target volume 10 when a receiver element 70 number *j* is considered as a source of electromagnetic wave for a receiver element 70 number i.

Preferably, these receiver-receiver functions $G_{ij}^{f}$ are Green's functions known by the one skilled in the art. The reflections at the receiver elements 70 and at the target volume 10 are taken into account by the feedback loops depicted in the flowchart of figure 2. Specific global reflection coefficients $R_{f,j}$ and MxM receiver-receiver functions $G_{ij}^f$ are introduced in these feedback loops.

By following the approach illustrated in figure 2, one can deduce a simulated signal $S_{sim}$ whose preferred expressions are given below in preferred embodiments corresponding to different geometries. Finally, values of physical parameters of the target volume 10 can be obtained by minimizing a function depending on the measured signal $S_{mes}$ and the simulated signal $S_{sim}$. Preferably $S_{sim}$ and $S_{mes}$ are determined for different couples of distances $(h_{1,s}, h_{1,f})$ and values of physical parameters of the target volume 10 are obtained by minimizing a function depending on the different measured $S_{mes}$ and simulated $S_{sim}$ signals determined for the different couples of distances $(h_{1,s}, h_{1,f})$. Preferably, one can follow a least squares formulation to minimize such a function: one has to find the minimum of an objective function $\phi(P)$ depending of the measured $S_{mes}$ and simulated signals $S_{sim}$, where P is a parameter vector containing the physical parameters of the target volume 10 to be estimated. An example of an objective function is given by equation (Eq. 4a):

$$\phi(P) = \left| \overrightarrow{S_{mes}} - \overrightarrow{S_{sim}} \right|^T C^{-1} \left| \overrightarrow{S_{mes}} - \overrightarrow{S_{sim}} \right| \text{ (Eq. 4a).}$$

As in equation (Eq. 4a), the measured and simulated signals are preferably vectors: $\overrightarrow{S_{mes}}$ and $\overrightarrow{S_{sim}}$. These vectors correspond to the measured and simulated signals for different frequencies and/or different couples of distances $(h_{1,s}, h_{1,f})$ for instance. This allows one to optimize the search of the minimum of the objective function $\phi(P)$. Nevertheless, one could use only one value for the measured $S_{mes}$ and simulated $S_{sim}$ signals that then, reduce to scalars : $S_{mes}$ and $S_{sim}$. Nevertheless, each of the element of vectors $\overrightarrow{S_{mes}}$ and $\overrightarrow{S_{sim}}$ are complex quantities (as well as $S_{mes}$ and $S_{sim}$ when only one frequency and singles values of $h_{1,s}$ and $h_{1,f}$ are considered). This is why, in equation (Eq. 4a), their difference is expressed by the amplitude of the differences in a complex plane: the vertical bars in equation (Eq. 4a) represent the module of a complex number. As $\overrightarrow{S_{mes}}$ and $\overrightarrow{S_{sim}}$ are vectors in the general case, the exponent 'T' in equation (Eq. 4a) designates a transpose operation.

In equation (Eq. 4a), C is a measurement error covariance matrix whose elements $C_{ij}$ are defined as $cov(x_i, x_j)$ where $cov$ is a covariance operator and $x_i$ and $x_j$ are errors associated to specific measurements (difference between $S_{mes}$ and $S_{sim}$ for a specific frequency, for instance). When these errors are homoscedastic and uncorrelated, the covariance matrix reduces to the error variance (see for instance, Bard, Y., 1974. Nonlinear Parameter Estimation. Academic Press, New York, N.Y.). To solve equation (Eq. 4a), one needs a robust global optimization procedure. One can use as an example the approach of article entitled "Estimating soil electric properties from monostatic ground-penetrating radar signal inversion in the frequency domain," published in Water Resources Res., vol. 40, p. W04 205, 2004 by S. Lambot et al. In this approach, a global multilevel coordinate search (GMCS) algorithm is combined sequentially with a classical Nelder-Mead simplex algorithm (NMS). The GMCS algorithm is explained in the article entitled "Global optimization by multilevel coordinate search," published in J. Glob. Opt., vol. 14, pp. 331-355, 1999, by W. Huyer and A. Neumaier. The NMS algorithm is explained in the article entitled "Convergence properties of the Nelder-Mead simplex method in low dimensions," published in SIAM J. Opt., vol. 9, pp. 112-147, 1998, by J. Lagarias et al. An optimization procedure for solving equation (Eq. 4a) is also described in the article entitled "A global multilevel coordinate search procedure for estimating the unsaturated soil hydraulic properties", published in water resources research, vol. 38, no. 11, 1224, 2002, by S. Lambot et al.

Knowing $S_{mes}$ and $S_{sim}$ (or $\overrightarrow{S_{mes}}$ and $\overrightarrow{S_{sim}}$), one can also use available programs for determining the set of values of physical parameters that minimize the differences between $S_{mes}$ and $S_{sim}$. An example of such a program is MCS (Global Optimization by Multilevel Coordinate Search, http://www.mat.univie.ac.at/~neum/software/mcs/).

According to a preferred embodiment, the inventor proposes to use the method of the invention where a measured signal $S_{sim}$ corresponding to a couple of distances $(h_{1,s}, h_{1,f})$ is given by equation (Eq. 5):

$$S_{sim} = T_1 + \begin{bmatrix} T_{f,1} & T_{f,2} & \dots & T_{f,M} \end{bmatrix} ((A^H A)^{-1} A^H b) \text{ (Eq. 5)}$$

with

$$A = \begin{bmatrix} R_{f,1}G_{11}^{f} & R_{f,2}G_{12}^{f} & \cdots & R_{f,M}G_{1M}^{f} \\ R_{f,1}G_{21}^{f} & R_{f,2}G_{22}^{f} & & R_{f,M}G_{2M}^{f} \\ & \vdots & \ddots & \vdots \\ R_{f,1}G_{M1}^{f} & R_{f,2}G_{M2}^{f} & \cdots & R_{f,M}G_{MM}^{f0} \end{bmatrix} - I_M \quad (\text{Eq. 6})$$

and

$$b = -\begin{bmatrix} T_{s,1}G_{11} & T_{s,2}G_{12} & \cdots & T_{s,N}G_{1N} \\ T_{s,1}G_{21} & T_{s,2}G_{22} & & T_{s,N}G_{2N} \\ & \vdots & \ddots & \vdots \\ T_{s,1}G_{M1} & T_{s,2}G_{M2} & \cdots & T_{s,N}G_{MN} \end{bmatrix} - \begin{bmatrix} 1 \\ 1 \\ \vdots \\ 1 \\ 1 \end{bmatrix} (\text{Eq. 7})$$

where :

- $I_M$ is an M-order identity matrix, $A^H$ is a conjugate transpose matrix of matrix A, receiver-receiver functions $G_{ij}^{f}$ are Green's functions;
- source-receiver functions $G_{cd}$ (c = 1... M; d = 1... N) are Green's functions taking into account the reflection phenomena at the target volume 10 for incident electromagnetic waves 90 travelling from a source element 60 number d to a receiver element 70 number c;
- $T_{f,i}$ (i = 1...M) are part of the antenna-characteristic reflection and transmission coefficients and are transmission coefficients of the M receiver elements; $T_{s'd}$ (d = 1 ... N) are part of the antenna-characteristic reflection and transmission coefficients and are transmission coefficients of the N source elements.

The definition of a conjugate transpose (also named Hermitian) matrix $A^H$ of a matrix $A$ is given by equation (Eq. 8):

$$A_{ab}^{H} = A_{ab}^{*} \quad (\text{Eq. 8})$$

where the symbol * designates a complex conjugate. The complex conjugate of a complex number z = 3 + 2i is z* = 3 - 2i, where i, stands for the imaginary number such that $i^2$ = -1.

Equation (Eq. 5) has been established in the frequency domain and is also valid when only one frequency of the incident signal *a* is used (the one skilled in the art can indeed either work in a time domain or in a frequency domain). Equation (Eq. 5) comes from the solution of a linear system of equations in a matrix form that is formulated by expressing electromagnetic waves $EM_i$ (i = 1 ... M) at some points of the block diagram of figure 2 as the sum of different unit source contributions. For instance, by assuming that there are three unit source elements 60 and three receiver elements 70, the problem can be expressed as follows:

$$\begin{cases} EM_1 = T_{s,1}G_{11} + T_{s,2}G_{12} + T_{s,3}G_{13} + R_{f,1}G_{11}^{f}EM_1 + R_{f,2}G_{12}^{f}EM_2 + R_{f,3}G_{13}^{f}EM_3 \\ EM_2 = T_{s,1}G_{21} + T_{s,2}G_{22} + T_{s,3}G_{23} + R_{f,1}G_{21}^{f}EM_1 + R_{f,2}G_{22}^{f}EM_2 + R_{f,3}G_{23}^{f}EM_3 \\ EM_3 = T_{s,1}G_{31} + T_{s,2}G_{32} + T_{s,3}G_{33} + R_{f,1}G_{31}^{f}EM_1 + R_{f,2}G_{32}^{f}EM_2 + R_{f,3}G_{33}^{f}EM_3 \end{cases}$$

$$\begin{cases} (R_{f,1}G_{11}^f - 1) \ EM_1 + & R_{f,2}G_{12}^f \quad EM_2 + & R_{f,3}G_{13}^f \quad EM_3 = & -(T_{s,1}G_{11} + T_{s,2}G_{12} + T_{s,3}G_{13}) \\ R_{f,1}G_{21}^f \quad EM_1 + & (R_{f,2}G_{22}^f - 1) \ EM_2 + & R_{f,2}G_{23}^f \quad EM_3 = & -(T_{s,1}G_{21} + T_{s,2}G_{22} + T_{s,3}G_{23}) \\ R_{f,1}G_{31}^f \quad EM_1 + & R_{f,2}G_{32}^f \quad EM_2 + & (R_{f,3}G_{33}^f - 1) \ EM_3 = & -(T_{s,1}G_{31} + T_{s,2}G_{32} + T_{s,3}G_{33}) \end{cases}$$

$$\underbrace{\left(\begin{bmatrix} R_{f,1}G_{11}^f & R_{f,2}G_{12}^f & R_{f,3}G_{13}^f \\ R_{f,1}G_{21}^f & R_{f,2}G_{22}^f & R_{f,3}G_{23}^f \\ R_{f,1}G_{31}^f & R_{f,2}G_{32}^f & R_{f,3}G_{33}^f \end{bmatrix} - \begin{bmatrix} 1 & 0 & 0 \\ 0 & 1 & 0 \\ 0 & 0 & 1 \end{bmatrix}\right)}_{\mathbf{A}} \underbrace{\begin{bmatrix} EM_1 \\ EM_2 \\ EM_3 \end{bmatrix}}_{\mathbf{EM}} = - \underbrace{\begin{bmatrix} T_{s,1}G_{11} & T_{s,2}G_{12} & T_{s,3}G_{13} \\ T_{s,1}G_{21} & T_{s,2}G_{21} & T_{s,3}G_{23} \\ T_{s,1}G_{31} & T_{s,2}G_{32} & T_{s,3}G_{33} \end{bmatrix} \begin{bmatrix} 1 \\ 1 \\ 1 \end{bmatrix}}_{\mathbf{b}}$$

Solving this linear system of equation for **EM**, we have: **EM** = $(\mathbf{A}^H\mathbf{A})^{-1}\mathbf{A}^H\mathbf{b}$ The electromagnetic waves $EM_i$ are then multiplied by the corresponding receiver transmission coefficients and subsequently summed up with $T_1$ to obtain $S_{sim}$.

For an infinite homogeneous target volume, Greens' functions in the spatial domain can be computed analytically. The situation is much more complex in a layered target volume where the Green functions must take into account all the transmissions, reflections and refractions that occur at the different interfaces. The Green functions represent the electromagnetic field radiated by a unit strength point source.

In a preferred embodiment, the receiver-receiver functions are given by

$$G_{ij}^f = \frac{1}{8\pi} \int_0^{+\infty} \tilde{G}_{ij}^f(k_\rho) k_\rho \, \mathrm{d}k_\rho \ (i = 1 \dots M; j = 1 \dots M) \ \text{(Eq. 9)}$$

and the source-receiver functions are given by :

$$G_{cd} = \frac{1}{8\pi} \int_0^{+\infty} \tilde{G}_{cd}(k_\rho) k_\rho \, \mathrm{d}k_\rho \ (c = 1 \dots M; d = 1 \dots N) \ \text{(Eq. 10)}$$

where

-

$$\tilde{G}_{ij}^f(k_\rho) = \left[ J_0(k_\rho \rho_f)\left(\frac{\Gamma_1 R_1^{TM}}{\eta_1} - \frac{\zeta_1 R_1^{TE}}{\Gamma_1}\right) - J_2(k_\rho \rho_f)\cos(2\theta_f)\left(\frac{\Gamma_1 R_1^{TM}}{\eta_1} + \frac{\zeta_1 R_1^{TE}}{\Gamma_1}\right)\right] \exp\left(-2\Gamma_1 h_{1,f}\right) \ \text{(Eq. 11)}$$

-

$$\tilde{G}_{cd}(k_\rho) = \left[ J_0(k_\rho \rho)\left(\frac{\Gamma_1 R_1^{TM}}{\eta_1} - \frac{\zeta_1 R_1^{TE}}{\Gamma_1}\right) - J_2(k_\rho \rho)\cos(2\theta)\left(\frac{\Gamma_1 R_1^{TM}}{\eta_1} + \frac{\zeta_1 R_1^{TE}}{\Gamma_1}\right)\right] \exp\left(-\Gamma_1(h_{1,s} + h_{1f})\right) \ \text{(Eq. 12)}$$

-    $J_0$ is a first kind zero-order Bessel's function, $J_2$ is a first kind second-order Bessel's function,
-    $\rho_f$ is a two-dimensional distance between two receiver elements, $\rho$ is a two-dimensional distance between a receiver element and a source element;

- $\theta_f$ is a two-dimensional angle between two receiver elements, $\theta$ is a two-dimensional angle between a receiver element and a source element;

- $R_1^{TM}$ and $R_1^{TE}$ are given by recursive relations :

$$R_l^{TM} = \frac{r_l^{TM} + R_{l+1}^{TM} exp(-2\Gamma_{l+1}h_{l+1})}{1 + r_l^{TM} R_{l+1}^{TM} exp(-2\Gamma_{l+1}h_{l+1})} \quad \text{(Eq. 13)}$$

$$r_l^{TM} = \frac{\eta_{l+1}\Gamma_l - \eta_l\Gamma_{l+1}}{\eta_{l+1}\Gamma_l + \eta_l\Gamma_{l+1}} \;,\; R_{L-1}^{TM} = r_{L-1}^{TM}$$

$$R_l^{TE} = \frac{r_l^{TE} + R_{l+1}^{TE} \exp(-2\Gamma_{l+1}h_{l+1})}{1 + r_l^{TE} R_{l+1}^{TE} \exp(-2\Gamma_{l+1}h_{l+1})} \quad \text{(Eq. 14)}$$

$$r_l^{TE} = \frac{\mu_{l+1}\Gamma_l - \mu_l\Gamma_{l+1}}{\mu_{l+1}\Gamma_l + \mu_l\Gamma_{l+1}} \;,\; R_{L-1}^{TE} = r_{L-1}^{TE}$$

with *l* = 1...*L* where *L* - 1 represents a number of layers of the target volume 10, where l = 1 corresponds to a medium where the N source elements 60 and the M receiver elements 70 are positioned, and where:

$$\Gamma_l = \sqrt{k_\rho^2 - k_l^2} \text{ with } k_l^2 = \omega^2\mu_l\left(\varepsilon_l - \frac{j\sigma_l}{\omega}\right), \eta_l = \sigma_l + j\omega\varepsilon_l \text{ and } \zeta_l = j\omega\mu_l$$

where $\mu_l$ is a magnetic permeability of a layer number *l,* $\sigma_l$ is an electrical conductivity of a layer number *l,* $\varepsilon_l$ is a permittivity of a layer number l, and with $\omega$ being a pulsation of the incident signal *a* defined as $\omega$ = 2$\pi f$, where *f* is the frequency of the incident signal *a*.

To carry out the integrations of equations (Eq. 9) and (Eq. 10), one can preferably use specific integration strategies to cope with the presence of singularities (surface wave poles and branch points) along the integration path. A short review of available integration procedures as well as a fast integration method for the far-field case are presented by Lambot et al. (Lambot, S., Slob, E. and Vereecken, H., 2007. Fast evaluation of zero-offset Green's function for layered media with application to ground-penetrating radar. Geophysical Research Letters, 34: L21405, doi: 10.1029/2007GL031459).

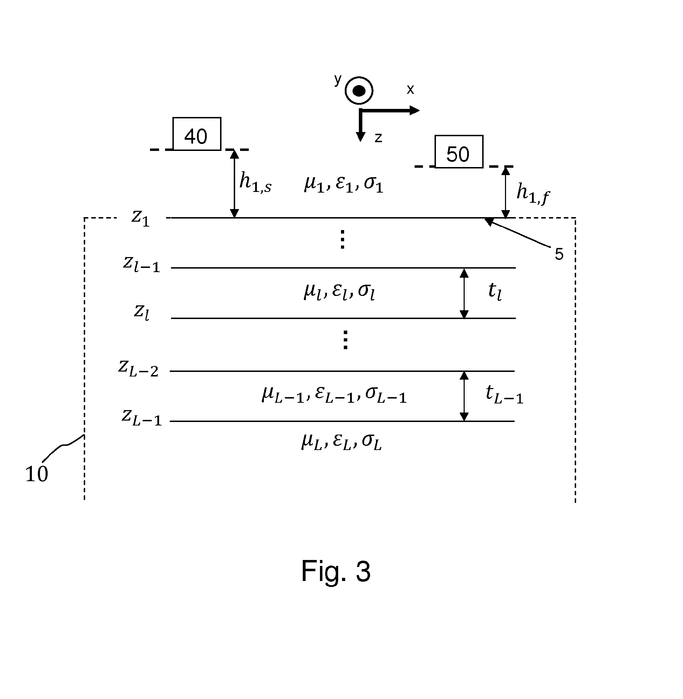

Equations (Eq. 12) can be obtained by assuming that a unit-strength x-directed electric source (or electric dipole) is positioned at a source element 60 number d. The corresponding x-directed electric field at a receiver element 70 number c is then given by equation (Eq. 12). In a similar way, equation (Eq. 11) can be obtained by assuming that a unit-strength x-directed electric source (or electric dipole) is positioned at a receiver element 70 number *j*. The corresponding x-directed electric field at a receiver element 70 number i is then given by equation (Eq. 11). The orientation of the x-axis is shown in figure 3 that represents a field source 40 and a field receiver 50 positioned above a target volume 10. This target volume 10 is assumed to have *L* - 1 different layers.

First kind Bessel's functions are given by equation (Eq. 15):

$$J_h(k_\rho\rho) = \frac{(-i)^{-h}}{2\pi}\int_0^{2\pi} \exp\left(-ik_\rho\rho\cos(\varphi)\right)\cos(n\varphi)\mathrm{d}\varphi \quad \text{(Eq. 15),}$$

where *'i'* stands for the imaginary number, and where h denotes the order of the Bessel's function. So, one has to take h = 0 to obtain a first kind zero-order Bessel's function, and *h* = 2 to obtain a first kind second-order Bessel's function.

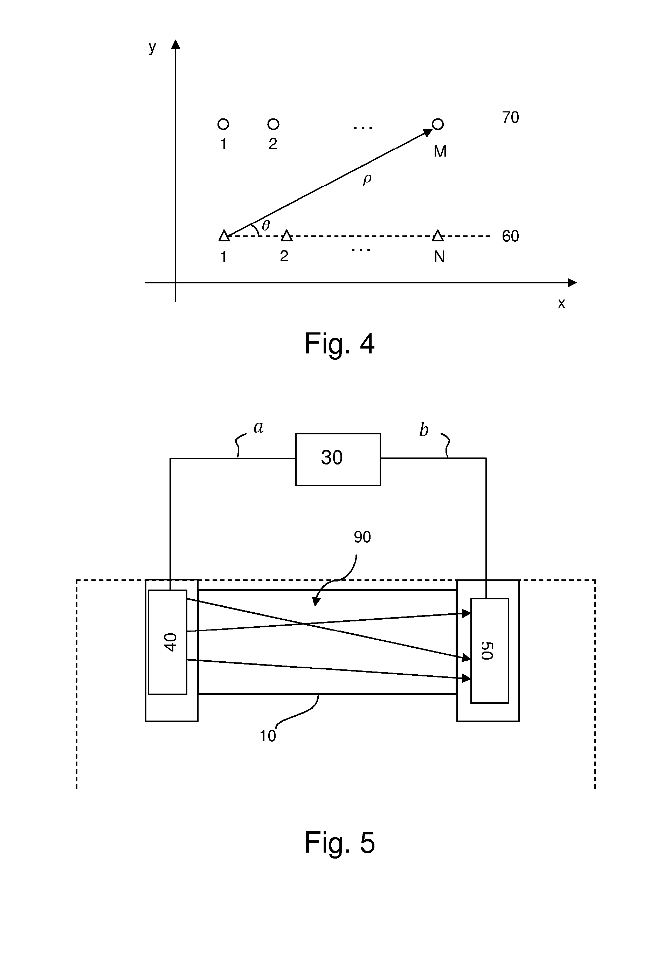

The two-dimensional distances $\rho_f$ and $\rho$ are measured in a x-y plane. An illustration of how a two-dimensional distances $\rho$ between source element number 1 and receiver element number M is determined is shown in figure 4. The

two-dimensional angles $\theta_f$ and $\theta$ are determined from the x-axis. Figure 4 also shows how the two-dimensional angle $\theta$ between source element number 1 and receiver element number M is determined.

The way to obtain equations (Eq. 13) and (Eq. 14) for the transverse magnetic (TM) and transverse electric (TE) global reflection coefficient is explained in details in the PhD thesis entitled "Hydrogeophysical characterization of soil using ground penetrating radar", by S. Lambot (Université catholique de Louvain, Belgium, 2003). The coefficient

$R_l^{TM}$ (respectively $R_l^{TE}$) represents a global reflection coefficient of a transverse magnetic (respectively electric) mode of excitation at interface $z = z_l$. The adjective global means that all the reflection phenomena taking place at or

below $z = z_l$ are taken into account. In the opposite, the coefficient $r_l^{TM}$ (respectively $r_l^{TE}$) represents a TM (respectively TE) mode local reflection coefficient at the interface $z = z_l$. Local means that only the reflection at the interface $z = z_l$ is taken into account. To obtain the equations (Eq. 13) and (Eq. 14), one has to consider a target volume 10 having $L - 1$ different layers (see figure 3). The deepest layer corresponding to $l = L$ is considered as being semi-infinite. Each layer l has specific physical parameters such as $\mu_l$, $\sigma_l$, $\varepsilon_l$, $h_l$ where $h_l$ stands for the thickness of layer l. In figure 3, it is assumed that the field source 40 and the field receiver 50 are positioned in a same medium characterized by specific physical parameters such as $\mu_1$, $\sigma_1$, $\varepsilon_1$ (l = 1). The idea to obtain equations (Eq. 13) and (Eq. 14) is that an electromagnetic wave in a homogeneous region can be decomposed in transverse electric and transverse magnetic modes of excitation. When the TE and TM modes are known, the whole electromagnetic wave is known. As the layer corresponding to $l = L$ is considered as being semi-infinite, there are only down-going waves in this layer, hence the global reflection coefficient at the lowest interface equals the local reflection coefficient at $z = z_{L-1}$, which means $R_{L-1}^{TM} = r_{L-1}^{TM}$ and

$R_{L-1}^{TE} = r_{L-1}^{TE}$ (this initiates the recursion formula).

When using the method of magnetic induction, one could use equation (Eq. 5) with (Eq. 6) and (Eq. 7) to evaluate a simulated signal $S_{sim}$. Other Green's functions $G_{ij}^f$ and $G_{cd}$ would then be used. In this case, the field source 40 and the field receiver 50 are typically loop antennas. In far-field conditions (that typically apply when the distances between the loop antennas and the target volume 10 are larger than the diameter of these loop antennas), and for horizontal antenna loops, one can show that source-receiver Green's functions are then given by:

$$G_{cd} = \frac{1}{2\pi} \int_0^{+\infty} J_0(k_\rho \rho) \tilde{G}_{cd}(k_\rho) k_\rho \mathrm{d}k_\rho \text{ (Eq. 16)}$$

where

$$\tilde{G}_{cd}(k_\rho) = \frac{k_\rho^2}{2\zeta_1 \Gamma_1} R_1^{TE} \exp(-\Gamma_1(h_{1,s} + h_{1,f})) \text{ (Eq. 17)}$$

Receiver-receiver Green's functions are:

$$G_{ij}^f = \frac{1}{2\pi} \int_0^{+\infty} J_0(k_\rho \rho_f) \tilde{G}_{ij}^f(k_\rho) k_\rho \mathrm{d}k_\rho \text{ (Eq. 18)}$$

where

$$\tilde{G}_{ij}^f(k_\rho) = \frac{k_\rho^2}{2\zeta_1 \Gamma_1} R_1^{TE} \exp(-2\Gamma_1 h_{1,f}) \text{ (Eq. 19)}$$

The subscript 1 in equation (Eq. 17) stands for the medium where the two antenna loops are positioned (see figure 3).

The global reflection coefficient $R_1^{TE}$ is given by recursive relations as above (equation (Eq. 14)). $J_0$ stands for a first kind zero-order Bessel's function whose definition has been given above (Eq. 15).

Preferably, the number of source elements N is equal to the number of receiver elements M. More preferably, the field source 40 and the field receiver 50 are symmetric such that $T_{s,1} = T_{S,N}$, $T_{f,1} = T_{f,N}$, $R_{f,1} = R_{f,N}$, $T_{s,2} = T_{s,N-1}$, ... (M=N in this case).

When N=1 and M=1, one can follow the calibration procedure explained in the article "Effect of soil roughness on the inversion of off-ground monostatic GPR signal for noninvasive quantification of soil properties", by S. Lambot et al. and published in Water Resources Res., vol. 42, W003403 to determine the antenna-characteristic reflection and transmission coefficients $T_1$, $T = T_s T_f$ and $R_f$.

When N>1 and M>1, the inventors propose to use the following calibration procedure for determining the antenna-characteristic reflection and transmission coefficients that are used when determining a simulated signal $S_{sim}$ with the method of the invention. The field source 40 and the field receiver 50 are positioned at different calibration distances from a calibration volume 100. We name the calibration distances of the field source 40 from the calibration volume 100 by $hcal_{s,x}$ and the calibration distances of the field receiver 50 from same calibration volume 100 by $hcal_{f,x}$, where $x = 1,...,Xcal$, $Xcal$ being an integer larger than three. So, one can define couples of calibration distances $(hcal_{s,x}, hcal_{f,x})$. To carry out the calibration procedure proposed by the inventor, one has to have a difference $hcal_{s,x} - hcal_{f,x}$ that is constant for $x = 1,...,Xcal$. Preferably, at least three but not all of the calibration distances $hcal_{s,x}$ (respectively $hcal_{f,x}$) correspond to far-field conditions for the field source 40 (respectively field receiver 50). This means that at least three but not all $hcal_{s,x}$ (respectively $hcal_{f,x}$) are much larger than the largest dimension of the field source 40 (respectively field receiver 50) (typically, two times larger). When the field source 40 (respectively field receiver 50) has a circular form with a diameter $\phi$, that means that $hcal_{s,x}$ (respectively $hcal_{f,x}$) is at least two times larger than $\phi$.

For each of the calibration distances, $hcal_{s,x}$, an incident signal $a$ is provided to the field source 40 such that said field source 40 sends incident electromagnetic waves 90 to the calibration volume 100, some of them being reflected back to the field receiver 50 positioned at the calibration distance $hcal_{f,x}$ from the calibration volume 100. For each couple of calibration distances, $(hcal_{s,x}, hcal_{f,x})$, one has to acquire a backscattered signal $b_{mes}$ from the field receiver 50, said backscattered signal $b_{mes}$ depending on the incident electromagnetic waves 90 sent by the field source 40 positioned at $hcal_{f,x}$. For each couple of calibration distances $(hcal_{s,x}, hcal_{f,x})$, one can then determine a measured signal $S_{mes}$. When using a VNA, the measured signal is preferably given by $S_{mes} = b_{mes}/a$. Other definitions are possible.

For at least three but not all couple of calibration distances $(hcal_{s,x}, hcal_{f,x})$, it is assumed that the field source 40 and the field receiver 50 are points. Then, equation (Eq. 5) reduces to (Eq. 20):

$$S_{sim}(\omega) = \frac{b(\omega)}{a(\omega)} = T_1(\omega) + \frac{T_f(\omega)G(\omega)T_s(\omega)}{1-R_f(\omega)G^f(\omega)} = T_1(\omega) + \frac{T(\omega)G(\omega)}{1-R_f(\omega)G^f(\omega)} \quad \text{(Eq. 20)}$$

where $T(\omega) = T_f(\omega)T_s(\omega)$. The coefficient $T_f(\omega)$ (respectively $T_s(\omega)$) stands for the transmission coefficient of the field receiver 50 (respectively field source 40) that is assumed to be a point. $R_f$ is a reflection coefficient of the field receiver 50. So, equation (Eq. 20) has three unknowns : $T_1(\omega)$, $T(\omega)$, and $R_f$ that are frequency-dependent. By performing three measurements at three different couples of calibration distances $(hcal_{s,x}, hcal_{f,x})$, one can obtain three measured signals $S_{mes}$. By introducing these measured signals $S_{mes}$ in equation (Eq. 20), one can deduce the values $T_1$, $T$, and $R_f$ by solving a system of linear equations. Preferably, more than three $S_{mes}$ and $S_{sim}$ corresponding to more than three couples of calibration distances $(hcal_{s,x}, hcal_{f,x})$ are used for determining the three antenna-characteristic reflection and transmission coefficients $T_1(\omega)$, $T(\omega)$, and $R_f$. By minimising a function depending of these $S_{mes}$ and $S_{sim}$, one can determine $T_1(\omega)$, $T(\omega)$, and $R_f$. $S_{sim}$ being evaluated by using equation (Eq. 20). This problem can also be solved directly in a matrix form as the solution of a system of linear equations (far-field conditions). The calibration volume 100 has known physical properties. Hence, one can evaluate the source-receiver and receiver-receiver functions, G and $G^f$ entering equation (Eq. 20). Preferably, the calibration volume 10 is a volume of water with a metallic plate placed at the bottom. More preferably, only a copper plate is used. This plate is preferably chosen large enough to appear as infinite. By minimising the differences between $S_{mes}$ and $S_{sim}$, one can deduce the three coefficients $T_1$, $T$, and $R_f$, preferably by following an approach similar to the one described in the article "Effect of soil roughness on the inversion of off-ground monostatic GPR signal for noninvasive quantification of soil properties", by S. Lambot et al. and published in Water Resources Res., vol. 42, W003403. When the frequency dependence of the three values $T_1$, $T$, and $R_f$ are wanted, one has to determined $S_{mes}$ and $S_{sim}$ for each of the desired frequency.

From these three antenna-characteristic reflection and transmission coefficients , $T_1$, $T$, and $R_f$, one can determine initial values of antenna-characteristic reflection and transmission coefficients for the N source elements 60 and the M receiver elements 70. These initial values are preferably given by

$$T_{s,n} = \sqrt{T}\big/N, \ \ T_{f,m} = \sqrt{T}\big/M, \ \ R_{f,m} = R_f, \ \ T_1 = T_1 \ \text{where n} = 1...N, \text{and m} = 1...M.\text{ Preferably, it is assumed}$$

$T_{s,n} = T_{f,m}$ when N=M.

Then, the values of the antenna-characteristic reflection and transmission coefficients of the N source elements 60 and the M receiver elements 70 are refined by minimizing the differences between measured signals $S_{mes}$ and simulated signals $S_{sim}$ for an increasing number of couples of calibration distances ($hcal_{s,x}$, $hcal_{f,x}$). As an example, if three couples of calibration distances ($hcal_{s,x}$, $hcal_{f,x}$) are used when determining $T_1$, $T$, and $R_f$ in far-field conditions, one preferably considers in a first time four, in a second time five, and in a third time six couples of calibration distances ($hcal_{s,x}$, $hcal_{f,x}$) for refining the values of the antenna-characteristic reflection and transmission coefficients of the N source elements 60 and the M receiver elements 70. Preferably, $S_{sim}$ is then evaluated by using equation (Eq. 5) for which one can evaluate the receiver-receiver and source-receiver functions as the calibration volume 100 has known properties. For minimizing the differences between measured signals $S_{mes}$ and simulated signals $S_{sim}$, one can follow the approach of equation (Eq. 4) where the vector $\overrightarrow{S_{mes}}$ (respectively $\overrightarrow{S_{sim}}$) corresponds to the measured (respectively simulated) signals at the different couples of calibration distances ($hcal_{s,x}$, $hcal_{f,x}$). Preferably, the measured and simulated signals are determined for different frequencies. This allows one to evaluate the frequency dependence of the antenna-characteristic reflection and transmission coefficients of the N source elements 60 and the M receiver elements 70. Preferably, the calibration distances are such that $hcal_{s,x} = hcal_{f,x}$ for $x = 1,...,Xcal.$ Preferably, the transmission coefficients of the M receiver elements 70 and the transmission coefficients of the N source elements are assumed to be identical. Preferably, the calibration heights extend from the far field to the near-field including a zero distance (which means that $h_{1,s}$ and $h_{1,f}$ reduce to zero). Preferably, the steps between the different calibration distances are small. This help to ensure convergence of the algorithm towards the sought solution.

When the field source 40 and the field receiver 50 can be assumed symmetrical, one can use useful relations such as $T_{s,1} = T_{S,N}$, $T_{f,1} = T_{f,M}$, $R_{f,1} = R_{f,M}$. This decreases the number of unknowns to be determined.

The method of the invention is not limited to a configuration where the field receiver 50 detects electromagnetic waves 90 that are reflected by the target volume 10. Indeed, one could also use the method of the invention in a transmission configuration. Such a configuration is illustrated in figure 5. In this example, the field source 40 and the field receiver 50 are inserted in two different shafts. The field source 40 sends electromagnetic waves 90 that pass through the target volume 10 and some of said electromagnetic waves 90 hit the field receiver 50. Preferably, one can use equation (Eq. 5) for evaluating a simulated signal $S_{sim}$ in such a transmitting mode. Other receiver-receiver and source-receiver functions would then be used to take into account the propagation of incident electromagnetic waves 90 through the target volume 10.

According to a second aspect, the invention relates to a device 200 for determining values of physical parameters of a target volume. Such a device 200 is depicted in figure 1. In particular, the device 200 of the invention includes a computing unit such as a computer 260 with different computational modules. The computer 260 can be an ordinary, single processor personal computer that includes an internal memory for storing computer program instructions which control how a processing unit within the computer accepts, transforms, and outputs data. The internal memory includes both a volatile and a non-volatile portion. Those skilled in the art will recognize that the internal memory can be supplemented with computer memory media, such as a compact disk, flash memory cards, a magnetic disc drive or a dynamic random access memory. A software module 210 is able to represent the field source 40 (respectively the field receiver 50) by N (respectively by M ) equivalent source elements 60 (respectively receiver elements 70), N (respectively by M ) being an integer greater than or equal to one. A software module 220 is able to provide antenna-characteristic reflection and transmission coefficients of said N source elements 60 and said M receiver elements 70. From these antenna-characteristic reflection and transmission coefficients, a software module 230 is able to determine at least one simulated signal $S_{sim}$. When more than one simulated signal $S_{sim}$ are determined, each of them preferably corresponds to different couples of distances ($h_{1,s}$, $h_{1,f}$), where a first distance $h_{1,s}$ corresponds to a distance where the field source 40 is positioned and where a second distance $h_{1,f}$ corresponds to a distance where the field receiver 50 is positioned from the target volume 10. From at least one measured signal $S_{mes}$ provided by an apparatus 30 and from at least one simulated signal $S_{sim}$ provided by the software module 230, a software module 240 determines values of physical parameters of the target volume 10 that minimize a function depending on said at least one measured signal $S_{mes}$ and said at least one simulated signal $S_{sim}$. Optionally, the determined values of the sought physical parameters can be sent to a display 270.

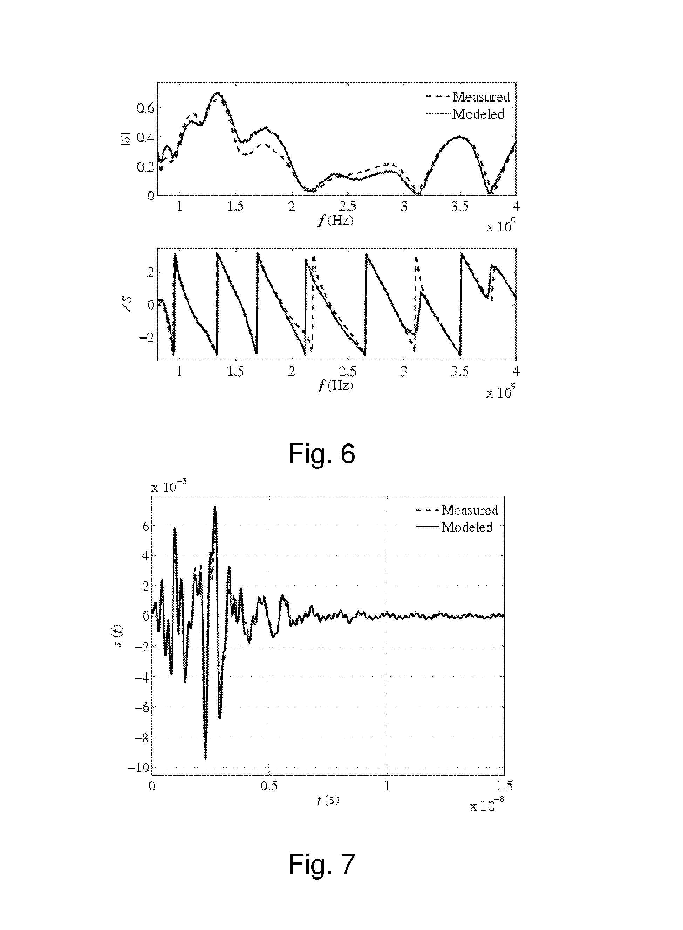

Figures 6 to 10 present some results obtained with the method of the invention. Measurements were performed with a Vivaldi antenna positioned at different heights above a 5 cm thick water layer for validating the method of the invention. The Vivaldi antenna plays the role of both the field source 40 and the field receiver 50. A copper plane was used as bottom boundary condition. From the measurement, a measured signal $S_{mes}$ was determined for various frequencies of an incident signal $a$ and at different heights of the Vivaldi antenna above the water layer. The Vivaldi antenna is connected to a VNA that allows one to obtain a measured signal $S_{mes}$. Water is of particular interest as it is a homogeneous medium with frequency-dependent electrical properties that also depend on salinity and temperature, thereby constituting a relatively complex medium in that frequency range (800-4000 MHz). The Debye model was used (see for instance the publication entitled "Polar molecules" by Debye, P., Reinhold, New York) for describing the frequency dependence of free water electrical properties.

Simulated signals $S_{sim}$ were after computed, and the minimum of a function depending on said simulated and measured signals, $S_{sim}$ and $S_{mes}$ was sought to determine values of unknown physical parameters (see the procedure related to equation (Eq. 4a)). For the results shown in figure 6 to 10, the unknown physical parameters were considered to be the thickness of the water layer and the height of the Vivaldi antenna above said water layer (as a Vivaldi antenna plays the role of both the field source 40 and the field receiver 50, the field source 40 and the field receiver 50 are considered as being at same heights above the water layer, which means = $h_{1,f}$). Other physical parameters such as the electrical conductivity of the water layer were fixed to their theoretical values when estimating the simulated signals $S_{sim}$ with equations (Eq. 5)-(Eq.7), and (Eq. 9)-(Eq. 14). For calculating simulated signals $S_{sim}$, the field source 40 was represented by eight source points 60 (and the field receiver 50 by eight receiver points 70). Figures 6 to 10 show measured and simulated signals, $S_{sim}$ and $S_{mes}$, for various heights of the Vivaldi antenna. In these figures, the shown simulated signals $S_{sim}$ correspond to those that minimize a function $\phi$ as defined in equation (Eq. 4a), which means that they correspond to simulated signals $S_{sim}$ with values of the unknown physical parameters that minimize said function $\phi$.

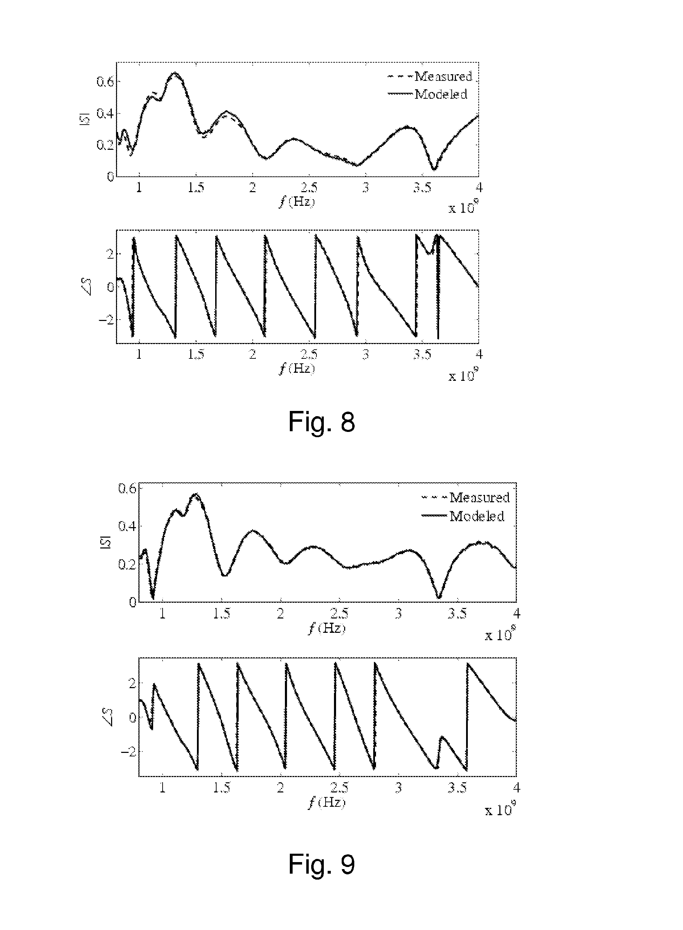

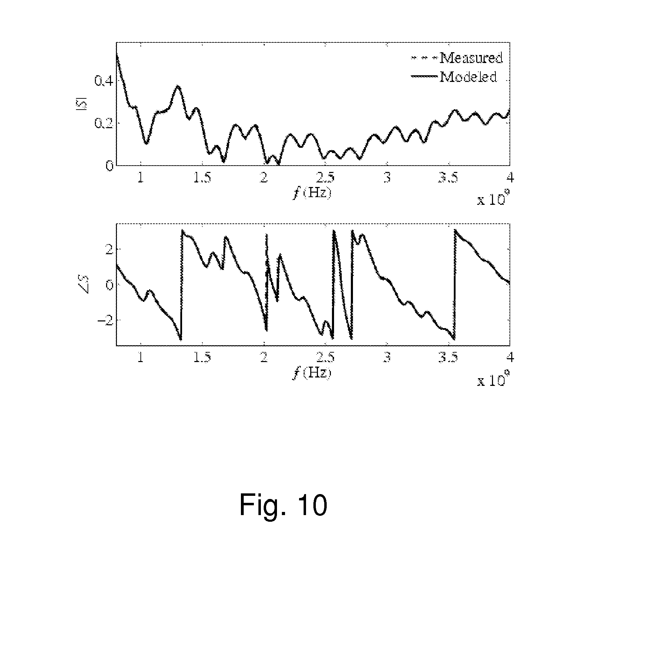

Figure 6 shows in the frequency domain, the measured signal $S_{mes}$ (dashed curve) and the simulated signal $S_{sim}$ (continuous curve) when the Vivaldi antenna is at 0.0 mm above the water layer. As a reminder, the signal given by a VNA is a complex signal having an amplitude and a phase. Figure 7 shows in the time domain, the measured and simulated signals, $S_{mes}$ and $S_{sim}$ when the Vivaldi antenna is at 0.0 mm above the water layer. Figure 8 shows in the frequency domain, the measured signal $S_{mes}$ (dashed curve) and the simulated signal $S_{sim}$ (continuous curve) when the Vivaldi antenna is at 9.86 mm above the water layer. Figure 9 shows in the frequency domain, the measured signal $S_{mes}$ (dashed curve) and the simulated signal $S_{sim}$ (continuous curve) when the Vivaldi antenna is at 25.53 mm above the water layer whereas figure 10 corresponds to a position of the Vivaldi antenna of 710 mm above the water layer. The upper graphs of figure 6 and 8 to 10 correspond to the amplitude of signals S, whereas the lower graphs of same figures correspond to their phase. From these figures, we see that for all heights, only small differences exist between the best simulated $S_{sim}$ and measured $S_{mes}$ signals. Hence, by using the method of the invention, one can obtain a simulated signal $S_{sim}$ very close to the real measured signal $S_{mes}$. This is due to the high accuracy of the method of the invention for determining values of the unknown physical parameters. For the case corresponding to figures 6 to 10, the accuracy in the determination of the thickness of the water layer and of the antenna height is sub-millimetric.

The present invention has been described in terms of specific embodiments, which are illustrative of the invention and not to be construed as limiting. More generally, it will be appreciated by persons skilled in the art that the present invention is not limited by what has been particularly shown and/or described hereinabove. The invention resides in each and every novel characteristic feature and each and every combination of characteristic features. Reference numerals in the claims do not limit their protective scope. Use of the verbs "to comprise", "to include", "to be composed of", or any other variant, as well as their respective conjugations, does not exclude the presence of elements other than those stated. Use of the article "a", "an" or "the" preceding an element does not exclude the presence of a plurality of such elements.

Summarized, the invention may also be described as follows. The method of the invention comprises the following steps: positioning a field source 40 at at least one first distance from a target volume 10; positioning a field receiver 50 at at least one second distance from same target volume 10; for each couple of first and second distance, determining a measured signal $S_{mes}$ and a simulated signal $S_{sim}$; determining values of physical parameters of same target volume 10 by minimizing a function depending on the measured $S_{mes}$ and simulated signals $S_{sim}$. The method of the invention is characterized in that when determining a simulated signal $S_{sim}$, specific global reflection coefficients and receiver-receiver functions are introduced in feedback loops.

## Claims

1. Method for determining one or more values of one or more physical parameters of a target volume (10) and comprising the steps of:

   - positioning a field source (40) at at least one first distance $h_{1,s}$ from said target volume (10);

- positioning a field receiver (50) at at least one second distance $h_{1,f}$ from said target volume (10);
- for each couple of distances ($h_{1,s}$, $h_{1,f}$), providing to said field source (40) an incident signal $a$ such that said field source (40) sends incident electromagnetic waves (90) to said target volume (10), some of said incident electromagnetic waves (90) hitting afterwards said field receiver (50);
- for each couple of distances ($h_{1,s}$, $h_{1,f}$), acquiring a backscattered signal $b_{mes}$ from said field receiver (50), said backscattered signal $b_{mes}$ resulting from said incident signal $a$;
- determining at least one measured signal $S_{mes}$, each of said at least one measured signal $S_{mes}$ being determined for each couple of distances ($h_{1,s}$, $h_{1,f}$) and being a function of said backscattered signal $b_{mes}$;
- representing said field source (40) by N equivalent source elements (60), N being an integer greater than or equal to one;
- representing said field receiver (50) by M equivalent receiver elements (70), M being an integer greater than or equal to one;
- providing antenna-characteristic reflection and transmission coefficients of said N source elements (60) and said M receiver elements (70);
- calculating at least one simulated signal $S_{sim}$, each of said at least one simulated signal $S_{sim}$ being calculated for each couple of distances ($h_{1,s}$, $h_{1,f}$) by considering electromagnetic propagation phenomena taking place in said target volume (100) subjected to incident electromagnetic waves (90);
- determining said one or more values of said one or more physical parameters that minimize a function $\phi$ depending on said at least one measured signal $S_{mes}$ and said at least one simulated signal $S_{sim}$;

**characterized in that**
said antenna-characteristic reflection and transmission coefficients include M specific global reflection coefficients $R_{f,i}$ ($i$ = 1 ... M) for the M equivalent receiver elements (70),
and **in that**
when calculating the at least one simulated signal $S_{sim}$, said receiver elements (70) are considered as sources of electromagnetic waves to said target volume (10) by the introduction of said M specific global reflection coefficients $R_{f,i}$ and MxM receiver-receiver functions $G_{ij}^{f}$   ($i$ = 1...M; $j$ = 1 ... M) in feedback loops.

2.  Method according to claim 1 **characterized in that** said M specific global reflection coefficients $R_{f,i}$ ($i$ = 1 ... M) are identical.

3.  Method according to claim 1 or 2 **characterized in that**:

    - said incident signal $a$ is provided to said field source (40) with various frequencies,
    - said at least one measured signal $S_{mes}$ is determined for each frequency of said incident signal $a$,
    - said at least one simulated signal $S_{sim}$ is calculated for each frequency of said incident signal $a$,
    - said antenna-characteristic reflection and transmission coefficients are provided for each frequency of said incident signal $a$,
    - said function $\phi$ depends on each measured and simulated signal, $S_{mes}$ and $S_{sim}$ determined for each frequency of said incident signal $a$.

4.  Method according to any of the previous claims **characterized in that** said simulated signal $S_{sim}$ is calculated by :

$$S_{sim} = T_1 + \begin{bmatrix} T_{f,1} & T_{f,2} & ... & T_{f,M} \end{bmatrix} ((A^H A)^{-1} A^H b)$$

with

$$A = \begin{bmatrix} R_{f,1}G_{11}^f & R_{f,2}G_{12}^f & \cdots & R_{f,M}G_{1M}^f \\ R_{f,1}G_{21}^f & R_{f,2}G_{22}^f & & R_{f,M}G_{2M}^f \\ & \vdots & \ddots & \vdots \\ R_{f,1}G_{M1}^f & R_{f,2}G_{M2}^f & \cdots & R_{f,M}G_{MM}^{f0} \end{bmatrix} - I_M$$

and

$$b = -\begin{bmatrix} T_{s,1}G_{11} & T_{s,2}G_{12} & \cdots & T_{s,N}G_{1N} \\ T_{s,1}G_{21} & T_{s,2}G_{22} & & T_{s,N}G_{2N} \\ & \vdots & \ddots & \vdots \\ T_{s,1}G_{M1} & T_{s,2}G_{M2} & \cdots & T_{s,N}G_{MN} \end{bmatrix} - \begin{bmatrix} 1 \\ 1 \\ \vdots \\ 1 \\ 1 \end{bmatrix}$$

where :

- $I_M$ is an M-order identity matrix,
- $A^H$ is a conjugate transpose matrix of matrix A,

- said receiver-receiver function $G_{ij}^f$ ($i = 1...M$; $j = 1...M$) are Green's functions;

- $G_{cd}$ (c = 1 ... M; $d$ = 1 ... N) are Green's functions;
- $T_{f,i}$($i = 1...M$) are part of the antenna-characteristic reflection and transmission coefficients and are transmission coefficients of the M receiver elements;
- $T_{s,d}$ ($d$ = 1...N) are part of the antenna-characteristic reflection and transmission coefficients and are transmission coefficients of the N source elements.

5. Method according to claim 4 **characterized in that**:

- said N equivalent source elements (60) are assumed to be unit-strength electric sources along an x-direction sending said incident electromagnetic waves (90) along a z-direction perpendicular to said x-direction;

- said receiver-receiver functions $G_{ij}^f$ are given by:

$$G_{ij}^f = \frac{1}{8\pi} \int_0^{+\infty} \tilde{G}_{ij}^f(k_\rho) k_\rho \, \mathrm{d}k_\rho \quad (i = 1 \dots M; j = 1 \dots M)$$

- and **in that** :

$$G_{cd} = \frac{1}{8\pi} \int_0^{+\infty} \tilde{G}_{cd}(k_\rho) k_\rho \, \mathrm{d}k_\rho \quad (c = 1 \dots M; d = 1 \dots N)$$

where

-

$$\tilde{G}_{ij}^{f}(k_\rho) = \left[ J_0\left(k_\rho \rho_f\right) \left(\frac{\Gamma_1 R_1^{TM}}{\eta_1} - \frac{\zeta_1 R_1^{TE}}{\Gamma_1}\right) - J_2\left(k_\rho \rho_f\right)\cos\left(2\theta_f\right)\left(\frac{\Gamma_1 R_1^{TM}}{\eta_1} + \right.$$

$$\left. \frac{\zeta_1 R_1^{TE}}{\Gamma_1}\right) \right] \exp\left(-2\Gamma_1 h_{1,f}\right)$$

-

$$\tilde{G}_{cd}(k_\rho) =$$

$$\left[ J_0(k_\rho \rho) \left(\frac{\Gamma_1 R_1^{TM}}{\eta_1} - \frac{\zeta_1 R_1^{TE}}{\Gamma_1}\right) - J_2(k_\rho \rho)\cos(2\theta)\left(\frac{\Gamma_1 R_1^{TM}}{\eta_1} + \frac{\zeta_1 R_1^{TE}}{\Gamma_1}\right)\right] \exp(-\Gamma_1(h_{1,s} +$$

$$h_{1f}))$$

- $J_0$ is a first kind zero-order Bessel function, $J_2$ is a first kind second-order Bessel function;
- $\rho_f$ is a distance between two receiver elements (70) measured in a plane perpendicular to said z-direction, $\rho$ is a two-dimensional distance between a receiver element (70) and a source element (60) measured in a plane perpendicular to said z-direction;
- $\theta_f$ is a two-dimensional angle between two receiver elements (70) measured from said x-axis, $\theta$ is a two-dimensional angle between a receiver element (70) and a source element (60) measured from said x-axis;
-

$$\Gamma_1 = \sqrt{k_\rho^2 - k_1^2} \ \text{ with } \ k_1^2 = \omega^2 \mu_1\left(\varepsilon_1 - \frac{j\sigma_1}{\omega}\right), \ \eta_1 = \sigma_1 + j\omega\varepsilon_1 \ \text{ and } \ \zeta_1 = j\omega\mu_1, \ \mu_1$$

being a magnetic permeability of a medium where the N source elements (60) and the M receiver elements (70) are positioned, $\sigma_1$ being an electrical conductivity of said medium where the N source elements (60) and the M receiver elements (70) are positioned, $\varepsilon_1$ being a permittivity of said medium where the N source elements (60) and the M receiver elements (70) are positioned, and with $\omega$ being a pulsation of the incident signal a,

- $R_1^{TM}$ and $R_1^{TE}$ are transverse magnetic and transverse electric global reflection coefficients.

6. Method according to claim 5 **characterized in that** said transverse magnetic and transverse electric global reflection coefficients are given by:

$$R_l^{TM} = \frac{r_l^{TM} + R_{l+1}^{TM}\exp(-2\Gamma_{l+1}h_{l+1})}{1 + r_l^{TM} R_{l+1}^{TM}\exp(-2\Gamma_{l+1}h_{l+1})}$$

$$r_l^{TM} = \frac{\eta_{l+1}\Gamma_l - \eta_l\Gamma_{l+1}}{\eta_{l+1}\Gamma_l + \eta_l\Gamma_{l+1}}, \qquad R_{L-1}^{TM} = r_{L-1}^{TM}$$

$$R_l^{TE} = \frac{r_l^{TE} + R_{l+1}^{TE}\exp(-2\Gamma_{l+1}h_{l+1})}{1 + r_l^{TE}R_{l+1}^{TE}\exp(-2\Gamma_{l+1}h_{l+1})}$$

$$r_l^{TE} = \frac{\mu_{l+1}\Gamma_l - \mu_l\Gamma_{l+1}}{\mu_{l+1}\Gamma_l + \mu_l\Gamma_{l+1}}, \qquad R_{L-1}^{TE} = r_{L-1}^{TE}$$

with $l = 1... L$ where $L - 1$ represents a number of layers of said target volume (10), where $l = 1$ corresponds to said medium where the N source elements and the M receiver elements are positioned, and where:

$$\Gamma_l = \sqrt{k_\rho^2 - k_l^2} \text{ with } k_l^2 = \omega^2\mu_l\left(\varepsilon_l - \frac{j\sigma_l}{\omega}\right), \eta_l = \sigma_l + j\omega\varepsilon_l \text{ and } \zeta_l = j\omega\mu_l$$

where $\mu_l$ is a magnetic permeability of a layer number l, $\sigma_l$ is an electrical conductivity of a layer number l, $\varepsilon_l$ is a permittivity of a layer number 1.

7. Method according to any of the previous claims, **characterized in that** said antenna-characteristic reflection and transmission coefficients of said N source elements (60) and said M receiver elements (70) are determined from a calibration procedure comprising the steps of :

a. choosing *xcal* couples of calibration distances ($hcal_{s,x}$, $hcal_{f,x}$), *x = 1, ... , Xcal,* such that the difference $hcal_{s,x}$ — $hcal_{f,x}$ has a constant value for *x = 1, ...,Xcal,* and such that *Xcal* is an integer larger than three;
b. positioning said field source (40) at *xcal* calibration distances $hcal_{s,x}$ from a calibration volume (100) and said field receiver (50) at *xcal* calibration distances $hcal_{f,x}$ (*x = 1, ...,Xcal*) from same calibration volume (100);
c. for each of said *xcal* couples of calibration distances ($hcal_{s,x}$, $hcal_{f,x}$), providing to said field source (40) an incident signal *a* such that said field source (40) sends incident electromagnetic waves (90) to said calibration volume (100), some of said incident electromagnetic waves (90) hitting afterwards said field receiver (50), and acquiring a backscattered signal $b_{mes}$ from said field receiver (50);
d. for each of said *xcal* couples of calibration distances ($hcal_{s,x}$, $hcal_{f,x}$), determining a measured signal $S_{mes}$;
e. for each of at least three but not all couples of calibration distances ($hcal_{s,x}$, $hcal_{f,x}$), calculating a simulated signal $S_{sim}$ by assuming that said field source (40) and said field receiver (50) are points;
f. determining three antenna-characteristic reflection and transmission coefficients by comparing the measured signals $S_{sim}$ and the simulated signals $S_{sim}$ corresponding to said three but not all couples of calibration distances ($hcal_{s,x}$, $hcal_{f,x}$);
g. assuming that said field source (40) is represented by said N equivalent source elements (60) and that said field receiver (50) is represented by said M equivalent receiver elements (70);
h. determining initial values of antenna-characteristic reflection and transmission coefficients of said N source elements (60) and said M receiver elements (70) from the three antenna-characteristic reflection and transmission coefficients determined in step f.;
i. refining values of said antenna-characteristic reflection and transmission coefficients of said N source elements and said M receiver elements by minimising a function depending on the measured signals $S_{mes}$ determined in step e. and an increasing number of simulated signals $S_{sim}$ determined for an increasing number of couples of calibration distances.

8. Method according to claim 7, **characterized in that** the at least three but not all couples of calibration distances ($hcal_{s,x}$, $hcal_{f,x}$) of step e. are such that the field source (40) is considered as being in far-field conditions when it is positioned at said at least three but not all calibration distances $hcal_{s,x}$ from said calibration volume (100) and **in that** the field receiver (50) is considered as being in far-field conditions when it is positioned at said at least three but not all calibration distances $hcal_{f,x}$ from said calibration volume (100).

9. Method according to claim 7 or 8, **characterized in that** said antenna-characteristic reflection and transmission coefficients comprise transmission coefficients of the M receiver elements (70) and transmission coefficients of the N source elements (60), and **in that** said transmission coefficients of the M receiver elements (70) and said transmission coefficients of the N source elements (60) are assumed to be identical.

**10.** Method according to any of claims 7 to 9 **characterized in that** $hcal_{s,x} = hcal_{f,x}$ for $x = 1, ...,Xcal$.

**11.** Method according to any of claims 7 to 10 **characterized in that**:

- the simulated signal $S_{sim}$ calculated in step e. of the calibration procedure is given by

$$S_{sim} = T_1 + \frac{TG}{1 - R_f G^f},$$ where $T_1$, $T$, $R_f$ are the three antenna-characteristic reflection and transmission coefficients , and where G and $G^f$ are Green's functions, and **in that**,
- the simulated signals $S_{sim}$ used in step i. of the calibration procedure are given by $S_{sim} = T_1 + [T_{f,1}\ T_{f,2} ...T_{f,M}]$ $((\boldsymbol{A}^H\boldsymbol{A})^{-1}\boldsymbol{A}^H\boldsymbol{b})$.

**12.** Device (200) for determining values of physical parameters of a target volume (10) and comprising:

- a field source (40),
- a field receiver (50),
- an apparatus (30) for providing an incident signal $a$ to said field source (40),
- an apparatus (30) for acquiring a backscattered signal $b$ from said field receiver (50) and for determining at least one measured signal $S_{mes}$,
- means (210) for representing said field source (40) by N equivalent source elements (60), N being an integer greater than or equal to one,
- means (210) for representing said field receiver (50) by M equivalent receiver elements (70), M being an integer greater than or equal to one,
- means (220) for providing antenna-characteristic reflection and transmission coefficients of said N source elements (60) and said M receiver elements (70),
- means (230) for determining at least one simulated signal $S_{sim}$,
- means (240) for determining said values of said physical parameters that minimize a function depending on said at least one measured signal $S_{mes}$ and said at least one simulated signal $S_{sim}$,

**characterized in that**

said antenna-characteristic reflection and transmission coefficients include M specific global reflection coefficients $R_{f,i}$ $(i = 1 ... M)$ for the M equivalent receiver elements,

and **in that**

when determining the at least one simulated signal $S_{sim}$, said receiver elements are considered as acting as sources of electromagnetic waves by the introduction of said M specific global reflection coefficients $R_{f,i}$ and

M×M receiver-receiver functions $G_{ij}^f$ $(i = 1 ... M; j = 1 ... M)$ in feedback loops.

Fig. 1

Fig. 2

Fig. 3

Fig. 4

Fig. 5

Fig. 6

Fig. 7

Fig. 8

Fig. 9

Fig. 10

Europäisches
Patentamt

European
Patent Office

Office européen
des brevets

# EUROPEAN SEARCH REPORT

Application Number

EP 11 16 0917

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | S. LAMBOT, F. ANDRÉ, K.Z. JADOON, E.C. SLOB, AND H. VEREECKEN: "Full-waveform modeling of ground-coupled GPRantennas for wave propagation in multilayeredmedia: the problem solved ?", PROCEEDINGS OF THE 13TH INTERNATIONAL CONFERENCE ON GROUND PENETRATING RADAR, 2 June 2010 (2010-06-02), pages 898-902, XP002658184, * abstract * * Equ. 1,3,4 * * Chapter 3: Near Field Model * ----- | 1-10 | INV. G01V3/12 |
| A | SÉBASTIEN LAMBOT, EVERT C. SLOB, IDESBALD VAN DEN BOSCH, BENOIT STOCKBROECKX, AND MARNIK VANCLOOSTER: "Modeling of Ground-Penetrating Radar for AccurateCharacterization of Subsurface Electric Properties", IEEE TRANS. ON GEOSCIENCE AND REMOTE SENSING, vol. 42, no. 11, 11 November 2004 (2004-11-11), - 11 November 2004 (2004-11-11), pages 2555-2568, XP002658185, * abstract * * Equ. 1 * * Equ. 14, Equ. 16-18 * ----- | 1-10 | |
| A | US 5 384 715 A (LYTTON ROBERT L [US]) 24 January 1995 (1995-01-24) * abstract; figure 8 * * page 4, line 55 - line 68 * ----- | 1-10 | TECHNICAL FIELDS SEARCHED (IPC) G01V |
| A | US 2004/155810 A1 (WITTEN ALAN [US]) 12 August 2004 (2004-08-12) * abstract; figures 2,3 * * paragraph [0030] - paragraph [0032] * ----- | 1-10 | |

The present search report has been drawn up for all claims

| Place of search | Date of completion of the search | Examiner |
|---|---|---|
| Munich | 5 September 2011 | Wehland, Florian |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
 
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 11 16 0917

This annex lists the patent family members relating to the patent documents cited in the above-mentioned European search report.
The members are as contained in the European Patent Office EDP file on
The European Patent Office is in no way liable for these particulars which are merely given for the purpose of information.

05-09-2011

| Patent document cited in search report | | Publication date | Patent family member(s) | Publication date |
|---|---|---|---|---|
| US 5384715 | A | 24-01-1995 | NONE | |
| US 2004155810 | A1 | 12-08-2004 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 42052004 A, S. Lambot
- WO 03403 A

### Non-patent literature cited in the description

- **G. TOPP et al.** Electromagnetic determination of soil water content: Measurements in coaxial transmission lines. *Water Resources Res.,* 1980, vol. 16, 574-582
- **S LAMBOT et al.** *IEEE Trans. On Geoscience and Remote Sensing,* November 2004, vol. 42 (11
- **S LAMBOT et al.** *IEEE Trans. on Geoscience and Remote Sensing,* November 2004, vol. 42 (11
- Full-waveform modeling of ground-coupled GPR antennas for wave propagation in multilayered media: the problem solved ?. **S. LAMBOT et al.** Proceedings of the 13th International Conference on Ground Penetrating Radar. 21 June 2010, 898-902
- **S LAMBOT et al.** Modeling of ground-penetrating radar for accurate characterization of subsurface electric properties. *IEEE Trans. On Geoscience and Remote Sensing,* November 2004, vol. 42 (11
- **BARD, Y.** Nonlinear Parameter Estimation. Academic Press, 1974
- Estimating soil electric properties from monostatic ground-penetrating radar signal inversion in the frequency domain. *Water Resources Res.,* vol. 40
- **W. HUYER ; A. NEUMAIER.** Global optimization by multilevel coordinate search. *J. Glob. Opt.,* 1999, vol. 14, 331-355
- **J. LAGARIAS.** Convergence properties of the Nelder-Mead simplex method in low dimensions. *SIAM J. Opt.,* 1998, vol. 9, 112-147
- **S. LAMBOT.** A global multilevel coordinate search procedure for estimating the unsaturated soil hydraulic properties. *water resources research,* 2002, vol. 38 (11), 1224
- **LAMBOT, S. ; SLOB, E. ; VEREECKEN, H.** Fast evaluation of zero-offset Green's function for layered media with application to ground-penetrating radar. *Geophysical Research Letters,* 2007, vol. 34, L21405
- **S. LAMBOT.** Hydrogeophysical characterization of soil using ground penetrating radar. Université catholique de Louvain, 2003
- **S. LAMBOT et al.** Effect of soil roughness on the inversion of off-ground monostatic GPR signal for noninvasive quantification of soil properties. *Water Resources Res.,* vol. 42
- **DEBYE, P.** Polar molecules. Reinhold